# EUROPEAN PATENT SPECIFICATION

(11) **EP 4 217 271 B1**
(45) Date of publication and mention of the grant of the patent: **28.08.2024**
(21) Application number: 21794212.7
(22) Date of filing: 16.09.2021
(51) Int. Cl.: B64C 21/02, B64C 21/08, B64D 33/00, B64C 3/26, B64C 3/48, B64C 9/16

(54) **AN AIRCRAFT WING PROVIDED WITH A TRAILING EDGE REGION**
FLUGZEUGFLÜGEL MIT HINTERKANTENBEREICH
AILE D'AVION AVEC SECTEUR DE BORD DE FUITE

(30) Priority: 23.09.2020 NL 2026520
(43) Date of publication of application: 02.08.2023
(73) Proprietor: Technische Universiteit Delft, 2628 CN Delft (NL)
(72) Inventor: LUESUTTHIVIBOON, Salil, 2600 AA Delft (NL); FALCAO LOUREIRO RÊGO, Leandro, 2600 AA Delft (NL); RAGNI, Daniele, 2600 AA Delft (NL); AVALLONE, Francesco, 2600 AA Delft (NL); SNELLEN, Mirjam, 2600 AA Delft (NL); VAN DER ZWAAG, Sybrand, 2600 AA Delft (NL); CASALINO, Damiano, 2600 AA Delft (NL)
(74) Representative: Hoyng Rokh Monegier B.V.
(86) International application number: PCT/NL2021/050561
(87) International publication number: WO 2022/066001

(56) References cited:
- EP-A1- 3 608 223
- GB-A- 2 567 445
- US-A1- 2009 261 204
- US-A1- 2015 259 060
- US-A1- 2017 001 708

## Description

The invention relates to an aircraft wing according to the preamble of claim 1.

Such an aircraft wing is well known, and it is also well known that aircraft represent a notable source of aircraft noise, not only during takeoff and landing, but also during cruise flight. The noise may come from the airfoil itself generated by a turbulent boundary layer especially on a flap surface in the trailing edge region, but also from interaction noise due to the proximity between the wing and an exhaust flow from engines, or impinging vortices from propellers.

It is known to apply acoustic liners or open cell permeable structures in the trailing edge region of the aircraft wing to combat noise. However such liners and structures are effective only in one particular stage of flight, and are ineffective or possibly even counterproductive in other flight phases.

US2015/0259060 discloses for purposes of noise reduction an orthotropic lattice structure interconnecting porous surfaces of a flap connectable to an aircraft wing with internal lattice structured perforations to equalize a steady pressure field on the flap surfaces adjacent to the end and to reduce the amplitude of the fluctuations in the flow field near the flap end. The global communication that exists within all of the perforations provides a mechanism to lessen the pressure gradients experienced by the end portion of the flap. In addition to having diffusive effects (diffusing the incoming flow), the three-dimensional orthogonal lattice structure is also reactive (acoustic wave phase distortion) due to the interconnection of the perforations.

US2009/0261204 discloses an aircraft wing provided with a trailing edge region, wherein the trailing edge region is provided with a noise attenuation structure, which noise attenuation structure at least comprises two micro perforated plates adjacent to each other in combination that are both in an upper region of the trailing edge, and that are slidable with respect to each other for aligning and/or misaligning the micro perforations of the two adjacent micro perforated plates with respect to each other. The noise attenuation structure of this document can be provided on an upper region and on a lower region, that is on opposite sides of an aircraft wing, wherein both noise attenuation structures can be in communication with each other.

It is an object of the invention to provide a low-noise aircraft wing.

Accordingly an aircraft wing is proposed with the features of one or more of the appended claims.

In a first aspect of the invention the trailing edge region is delimited by a trailing edge, wherein a density of the micro perforations in the respective micro perforated plates increases towards the trailing edge. In this way an optimized permeability can be achieved with respect to a surface pressure distribution on the flap, and avoids a sudden change in impedance between solid and permeable surfaces of the aircraft wing so as to minimize possible losses in performance due to lift decrease. Accordingly the distribution of the micro perforations in the respective micro perforated plates is varied in order to answer to specific needs in particular parts of the trailing edge region of the aircraft wing.

Suitably a relative position of at least one of the second micro perforated plate and the third micro perforated plate is controllable with an actuator that is arranged to slide the at least one of the second micro perforated plate and the third micro perforated plate with respect to each other.

Preferably the micro perforations of the second micro perforated plate and the micro perforations of the third micro perforated plate are attuned to each other so as to arrange that the second micro perforated plate and the third micro perforated plate are able to occupy a first position wherein the micro perforations of the second micro perforated plate and the micro perforations of the third micro perforated plate are misaligned, and a second position wherein the micro perforations of the second micro perforated plate and the micro perforations of the third micro perforated plate are aligned, as well as any position between the first position and the second position.

Accordingly the aircraft wing of the invention preferably provides the following options:
1. The micro perforations of the second and third micro perforated plates are misaligned, providing no permeability through any of the honeycomb channels. The noise attenuation structure of the aircraft wing of the invention then operates as an acoustic liner. This mode can be activated when the flaps are fully retracted during the cruise phase of the flight.
2. Some of the micro perforations of the second and third micro perforated plates are aligned, providing permeability through some of the honeycomb channels. This provides a hybrid noise attenuation structure of the aircraft wing of the invention, between the acoustic liner option 1, and the following option 3 of a fully permeable structure. This mode can be activated when the flaps are partially deployed during takeoff.
3. The micro perforations of the second and third micro perforated plates are all aligned, providing permeability through all of the honeycomb channels. The noise attenuation structure is fully permeable, and this mode can be activated when the flaps are fully deployed during the approach phase.

In a preferred embodiment on top of the third micro perforated plate a smooth acoustically permeable surface layer is provided. This surface layer can be with a high form drag coefficient, for maintaining aerodynamic performance of the aircraft wing, as well as mitigating possible additional surface roughness.

The invention will hereinafter be further elucidated with reference to the drawing of an exemplary embodiment of an aircraft with an aircraft wing according to the invention that is not limiting as to the appended claims.

In the drawing:
- figure 1 shows an aircraft with an aircraft wing of the invention in a top view and a side view;
- figure 2 shows an exploded view of a noise attenuation structure as applied in the trailing edge region of the aircraft wing of the invention; and
- figure 3 shows different modes of application of the noise attenuation structure of figure 2.

Whenever in the figures the same reference numerals are applied, these numerals refer to the same parts.

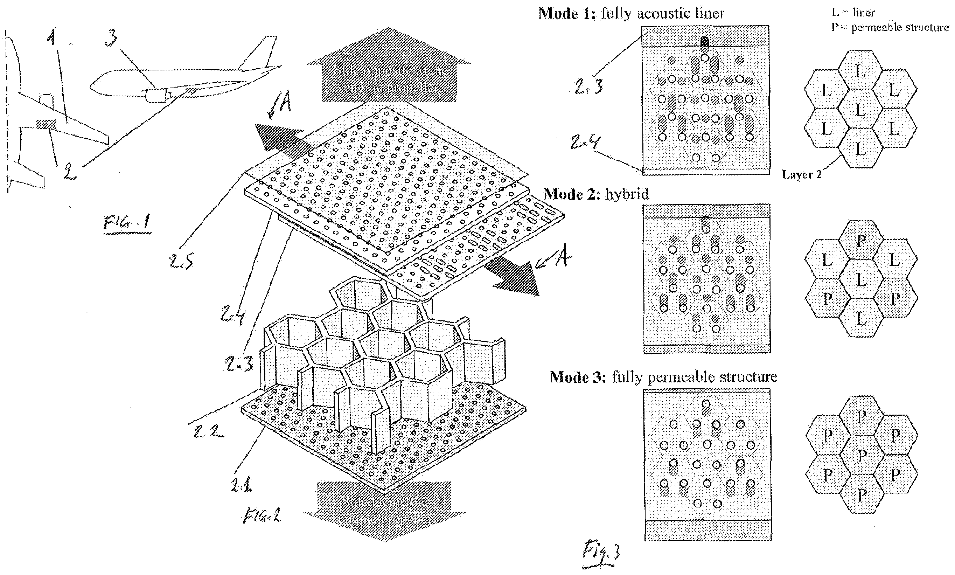

Figure 1 shows an aircraft with an aircraft wing 1 provided with a trailing edge region 2. Usually the aircraft wing 1 supports an engine 3.

According to the invention the trailing edge region 2 is provided with a noise attenuation structure which is shown in an exploded view in figure 2. The noise attenuation structure as shown in figure 2 comprises in combination, looking in an upwards direction: a first micro perforated plate 2.1 with micro perforations, a structure 2.2 with open channels, a second micro perforated plate 2.3 with micro perforations, and a third micro perforated plate 2.4 with micro perforations, wherein the open channels of the structure 2.2 connect micro perforations of the first micro perforated plate 2.1 with micro perforations of the second micro perforated plate 2.3. Further at least one of the second micro perforated plate 2.3 and the third micro perforated plate 2.4 is slidable with respect to the other as symbolized by the arrows A, for aligning and/or misaligning the micro perforations of the second micro perforated plate 2.3 and the third micro perforated plate 2.4 with respect to each other.

Preferably the open structure 2.2 is a honeycomb structure, but this is not essential.

Accordingly a relative position of at least one of the second micro perforated plate 2.3 and the third micro perforated plate 2.4 is controllable with an actuator (not shown - but clear to the skilled person) that is arranged to slide the at least one of the second micro perforated plate 2.3 and the third micro perforated plate 2.4 with respect to each other.

It is further observed that preferably the micro perforations of the second micro perforated plate 2.3 and the micro perforations of the third micro perforated plate 2.4 are attuned to each other so as to arrange that the second micro perforated plate 2.3 and the third micro perforated plate 2.4 are able to occupy a first position wherein the micro perforations of the second micro perforated plate 2.3 and the micro perforations of the third micro perforated plate 2.4 are misaligned, and a second position wherein the micro perforations of the second micro perforated plate 2.3 and the micro perforations of the third micro perforated plate 2.4 are aligned, as well as any position between the first position and the second position.

Accordingly figure 3 shows the following options:
Mode 1. The micro perforations of the second and third micro perforated plates 2.3, 2.4 are misaligned, providing no permeability through any of the honeycomb channels. The noise attenuation structure of the aircraft wing of the invention then operates as an acoustic liner. This mode 1 can be activated when the flaps are fully retracted during the cruise phase of the flight.
Mode 2. Some of the micro perforations of the second and third micro perforated plates 2.3, 2.4 are aligned, providing permeability through some of the honeycomb channels. This provides a hybrid noise attenuation structure of the aircraft wing of the invention, between the acoustic liner option mode 1, and the following mode option 3 representing a fully permeable structure. This mode 2 can be activated when the flaps are partially deployed during takeoff.
Mode 3. The micro perforations of the second and third micro perforated plates 2.3, 2.4 are all aligned, providing permeability through all of the honeycomb channels. The noise attenuation structure is fully permeable, and this mode 3 can be activated when the flaps are fully deployed during the approach phase.

It is further remarked that the trailing edge region 2 is delimited by a trailing edge, wherein a density of the micro perforations in the respective micro perforated plates 2.1, 2.3, 2.4 increases towards the trailing edge.

Finally it is remarked with reference to figure 2 that on top of the third micro perforated plate 2.4 preferably a smooth acoustically permeable surface layer 2.5 is provided.

Although the invention has been discussed in the foregoing with reference to an exemplary embodiment of an aircraft wing of the invention, the invention is not restricted to this particular embodiment which can be varied in many ways without departing from the invention. The discussed exemplary embodiment shall therefore not be used to construe the appended claims strictly in accordance therewith. On the contrary the embodiment is merely intended to explain the wording of the appended claims without intent to limit the claims to this exemplary embodiment. The scope of protection of the invention shall therefore be construed in accordance with the appended claims only, wherein a possible ambiguity in the wording of the claims shall be resolved using this exemplary embodiment.

## Claims

1. An aircraft wing (1) provided with a trailing edge region (2), which trailing edge region (2) is provided with a noise attenuation structure, which at least comprises in combination, looking in an upwards direction: a first micro perforated plate (2.1) with micro perforations, a structure (2.2) with open channels, a second micro perforated plate (2.3) with micro perforations, and a third micro perforated plate (2.4) with micro perforations, wherein the open channels of the structure (2.2) connect micro perforations of the first micro perforated plate (2.1) with micro perforations of the second micro perforated plate (2.3), and that at least one of the second micro perforated plate (2.3) and the third micro perforated plate (2.4) is slidable with respect to the other for aligning and/or misaligning the micro perforations of the second micro perforated plate (2.3) and the third micro perforated plate (2.4) with respect to each other, **characterized in that** the trailing edge region (2) is delimited by a trailing edge, wherein a density of the micro perforations in the respective micro perforated plates (2.1, 2.3, 2.4) increases towards the trailing edge.

2. The aircraft wing according to claim 1, **characterized in that** a relative position of at least one of the second micro perforated plate (2.3) and the third micro perforated plate (2.4) is controllable with an actuator that is arranged to slide the at least one of the second micro perforated plate (2.3) and the third micro perforated plate (2.4) with respect to each other.

3. The aircraft wing according to claim 1 or 2, **characterized in that** the micro perforations of the second micro perforated plate (2.3) and the micro perforations of the third micro perforated plate (2.4) are attuned to each other so as to arrange that the second micro perforated plate (2.3) and the third micro perforated plate (2.4) are able to occupy a first position wherein the micro perforations of the second micro perforated plate (2.3) and the micro perforations of the third micro perforated plate (2.4) are misaligned, and a second position wherein the micro perforations of the second micro perforated plate (2.3) and the micro perforations of the third micro perforated plate (2.4) are aligned, as well as any position between the first position and the second position.

4. The aircraft wing according to any one of claims 1 - 3, **characterized in that** on top of the third micro perforated plate (2.4) is a smooth acoustically permeable surface layer (2.5) .

## Patentansprüche

1. Luftfahrzeugflügel (1), der mit einem Hinterkantenbereich (2) versehen ist, wobei der Hinterkantenbereich (2) mit einer Geräuschdämpfungsstruktur versehen ist, die in Kombination mindestens, in eine Aufwärtsrichtung blickend, umfasst: eine erste mikroperforierte Platte (2.1) mit Mikroperforationen, eine Struktur (2.2) mit offenen Kanälen, eine zweite mikroperforierte Platte (2.3) mit Mikroperforationen und eine dritte mikroperforierte Platte (2.4) mit Mikroperforationen, wobei die offenen Kanäle der Struktur (2.2) Mikroperforationen der ersten mikroperforierten Platte (2.1) mit Mikroperforationen der zweiten mikroperforierten Platte (2.3) verbinden, und dass mindestens eine der zweiten mikroperforierten Platte (2.3) und der dritten mikroperforierten Platte (2.4) in Bezug auf die andere zum Ausrichten und/oder Fehlausrichten der Mikroperforationen der zweiten mikroperforierten Platte (2.3) und der dritten mikroperforierten Platte (2.4) in Bezug aufeinander verschiebbar ist, **dadurch gekennzeichnet, dass** der Hinterkantenbereich (2) durch eine Hinterkante begrenzt ist, wobei eine Dichte der Mikroperforationen in den jeweiligen mikroperforierten Platten (2.1, 2.3, 2.4) zu der Hinterkante hin zunimmt.

2. Luftfahrzeugflügel nach Anspruch 1, **dadurch gekennzeichnet, dass** eine relative Position mindestens einer der zweiten mikroperforierten Platte (2.3) und der dritten mikroperforierten Platte (2.4) mit einem Betätigungselement steuerbar ist, das arrangiert ist, um die mindestens eine der zweiten mikroperforierten Platte (2.3) und der dritten mikroperforierten Platte (2.4) in Bezug aufeinander zu verschieben.

3. Luftfahrzeugflügel nach Anspruch 1 oder 2, **dadurch gekennzeichnet, dass** die Mikroperforationen der zweiten mikroperforierten Platte (2.3) und die Mikroperforationen der dritten mikroperforierten Platte (2.4) aufeinander abgestimmt sind, um zu arrangieren, dass die zweite mikroperforierte Platte (2.3) und die dritte mikroperforierte Platte (2.4) in der Lage sind, eine erste Position, wobei die Mikroperforationen der zweiten mikroperforierten Platte (2.3) und die Mikroperforationen der dritten mikroperforierten Platte (2.4) fehlausgerichtet sind, und eine zweite Position, wobei die Mikroperforationen der zweiten mikroperforierten Platte (2.3) und die Mikroperforationen der dritten Mikroperforationsplatte (2.4) ausgerichtet sind, sowie eine beliebige Position zwischen der ersten Position und der zweiten Position einzunehmen

4. Luftfahrzeugflügel nach einem der Ansprüche 1 bis 3, **dadurch gekennzeichnet, dass** sich oben auf der dritten mikroperforierten Platte (2.4) eine glatte akustisch durchlässige Oberflächenschicht (2.5) befindet.

## Revendications

1. Aile d'aéronef (1) pourvue d'une région de bord de fuite (2), laquelle région de bord de fuite (2) est pourvue d'une structure d'atténuation du bruit, qui comprend au moins en combinaison, en regardant dans une direction ascendante : une première plaque microperforée (2.1) avec des microperforations, une structure (2.2) avec des canaux ouverts, une deuxième plaque microperforée (2.3) avec des microperforations, et une troisième plaque microperforée (2.4) avec des microperforations, dans laquelle les canaux ouverts de la structure (2.2) relient les microperforations de la première plaque microperforée (2.1) avec des microperforations de la deuxième plaque microperforée (2.3), et qu'au moins l'une parmi la deuxième plaque microperforée (2.3) et la troisième plaque microperforée (2.4) peut coulisser l'une par rapport à l'autre pour aligner et/ou désaligner les microperforations de la deuxième plaque microperforée (2.3) et de la troisième plaque microperforée (2.4) l'une par rapport à l'autre, **caractérisée en ce que** la région du bord de fuite (2) est délimitée par un bord de fuite, dans laquelle une densité des microperforations dans les plaques microperforées (2.1, 2.3, 2.4) respectives augmente vers le bord de fuite.

2. Aile d'aéronef selon la revendication 1, **caractérisée en ce qu'**une position relative d'au moins une parmi la deuxième plaque microperforée (2.3) et la troisième plaque microperforée (2.4) peut être commandée à l'aide d'un actionneur qui est agencé pour faire glisser l'au moins une parmi la deuxième plaque microperforée (2.3) et la troisième plaque microperforée (2.4) l'une par rapport à l'autre.

3. Aile d'aéronef selon la revendication 1 ou 2, **caractérisée en ce que** les microperforations de la deuxième plaque microperforée (2.3) et les microperforations de la troisième plaque microperforée (2.4) sont accordées l'une à l'autre de manière à ce que la deuxième plaque microperforée (2.3) et la troisième plaque microperforée (2.4) puissent occuper une première position dans laquelle les microperforations de la deuxième plaque microperforée (2.3) et les microperforations de la troisième plaque microperforée (2.4) sont désalignées, et une seconde position dans laquelle les microperforations de la deuxième plaque microperforée (2.3) et les microperforations de la troisième plaque microperforée (2.4) sont alignées, ainsi que toute position entre la première position et la seconde position.

4. Aile d'aéronef selon l'une quelconque des revendications 1 à 3, **caractérisée en ce que** la troisième plaque microperforée (2.4) est recouverte d'une couche de surface acoustiquement perméable lisse (2.5).
